# EUROPÄISCHE PATENTSCHRIFT

(11) **EP 2 733 472 B1**
(45) Veröffentlichungstag und Bekanntmachung des Hinweises auf die Patenterteilung: **01.01.2020**
(21) Anmeldenummer: 13005293.9
(22) Anmeldetag: 11.11.2013
(51) Int. Cl.: G01F 1/74, G01F 1/44, G01F 1/58, G01F 1/66, G01F 1/84

(54) **Kernmagnetisches Durchflussmessgerät und Verfahren zum Betreiben von kernmagnetischen Durchflussmessgeräten**
Nuclear magnetic resonance flow measurement device and method for operating nuclear magnetic resonance flow measurement devices
Appareil de mesure de débit à noyau magnétique et procédé de fonctionnement d'appareils de mesure de débit à noyau magnétique

(30) Priorität: 14.11.2012 DE 102012022243; 07.03.2013 DE 102013003837; 27.09.2013 DE 102013016052
(43) Veröffentlichungstag der Anmeldung: 21.05.2014
(73) Patentinhaber: Krohne AG, 4019 Basel (CH)
(72) Erfinder: Hogendoorn, Cornelius Johannes, 4211 BG Spijk (NL)
(74) Vertreter: Gesthuysen Patent- und Rechtsanwälte

(56) Entgegenhaltungen:
- WO-A1-84/04398
- WO-A2-98/59220
- US-A- 4 866 385
- US-A1- 2005 039 544
- COULTHARD J ET AL: "NON-RESTRICTIVE MEASUREMENT OF SOLIDS MASS FLOWRATE IN PNEUMATIC CONVEYING SYSTEMS", MEASUREMENT AND CONTROL, INSTITUTE OF MEASUREMENT AND CONTROL. LONDON, GB, Bd. 24, Nr. 4, 1. Mai 1991 (1991-05-01), Seiten 113-119, XP000230260, ISSN: 0020-2940
- LYNCH J: "TECHNIQUES DE DEBITMETRIE POLYPHASIQUE NON INTRUSIVE. REVUE BIBLIOGRAPHIQUE", OIL & GAS SCIENCE & TECHNOLOGY: REVUE DE L'INSTITUT FRANCAIS DU PETROLE, EDITIONS TECHNIP. PARIS, FR, Bd. 46, Nr. 1, 1. Januar 1991 (1991-01-01) , Seiten 59-88, XP000176950, ISSN: 1294-4475

## Beschreibung

Die Erfindung betrifft ein kernmagnetisches Durchflussmessgerät zur Durchflussmessung eines durch ein Messrohr strömenden mehrphasigen Mediums, mit einer kernmagnetischen Messeinrichtung, wobei die kernmagnetische Messeinrichtung um das Messrohr angeordnet ist. Darüber hinaus betrifft die Erfindung auch Verfahren zum Betreiben von kernmagnetischen Durchflussmessgeräten.

Die Atomkerne der Elemente, die einen Kernspin besitzen, besitzen auch ein durch den Kernspin hervorgerufenes magnetisches Moment. Der Kernspin kann als ein durch einen Vektor beschreibbarer Drehimpuls aufgefasst werden, und entsprechend kann auch das magnetische Moment durch einen Vektor beschrieben werden, der parallel zum Vektor des Drehimpulses ausgerichtet ist. Der Vektor des magnetisches Moments eines Atomkerns richtet sich bei Anwesenheit eines makroskopischen Magnetfelds parallel zu dem Vektor des makroskopischen Magnetfelds an der Stelle des Atomkerns aus. Dabei präzessiert der Vektor des magnetischen Moments des Atomkerns um den Vektor des makroskopischen Magnetfelds an der Stelle des Atomkerns. Die Frequenz der Präzession wird als Larmorfrequenz ω_{L} bezeichnet und ist proportional zum Betrag der Magnetfeldstärke *B*. Die Larmorfrequenz berechnet sich gemäß ω_{L} = γ *B.* Darin ist y das gyromagnetische Verhältnis, welches für Wasserstoffkerne maximal ist.

Messverfahren, welche die Präzession von Atomkernen eines Mediums bei Anwesenheit eines makroskopischen Magnetfelds durch Anregung mittels eines gesteuerten Magnetfelds beeinflussen und die Wirkung der Beeinflussung auswerten, werden als kernmagnetische Resonanz-Messverfahren bezeichnet. Für gewöhnlich werden die von den präzessierenden Atomkernen nach Anregungen in einer Sensorspule induzierten elektrischen Signale als Ausgangsgröße für die Auswertung verwendet. Voraussetzung für die Messung eines mehrphasigen Mediums ist, dass die einzelnen Phasen des Mediums zu unterscheidbaren kernmagnetischen Resonanzen angeregt werden können. Die Größe der von den präzessierenden Atomkernen einer Phase des Mediums in der Sensorspule induzierten elektrischen Signale ist abhängig von der Anzahl der präzessierenden Atomkerne pro Volumenelement in dieser Phase, demnach also abhängig von der Dichte der Phase, aber auch abhängig von der Beeinflussungsdauer der präzessierenden Atomkerne im beeinflussenden gesteuerten Magnetfeld. Folglich ist die Größe der elektrischen Signale bei den flüssigen Phasen des Mediums größer als bei den gasförmigen Phasen. Daraus folgt, dass bei kernmagnetischen Durchflussmessgeräten die Messgenauigkeit für die Messung der flüssigen Phasen des Mediums hinreichend genau sein kann, während die geringere Größe der elektrischen Signale bei den gasförmigen Phasen die Messgenauigkeit des kernmagnetischen Durchflussmessgeräte für die Messung der gasförmigen Phase beeinträchtigt, insbesondere dann, wenn die gasförmige Phase eine relativ geringe Dichte hat und/oder wenn die gasförmige Phase mit einer relativ hohen Geschwindigkeit durch das Messrohr strömt.

Ein Beispiel für Messgeräte, die die kernmagnetische Resonanz ausnutzen, sind die eingangs angesprochenen kernmagnetischen Durchflussmessgeräte, deren kernmagnetische Messeinrichtung den Durchfluss, das sind die Strömungsgeschwindigkeiten der einzelnen Phasen des Mediums und die relativen Anteile der einzelnen Phasen am mehrphasigen Medium, messen können. Kernmagnetische Durchflussmessgeräte können z. B. zur Durchflussmessung des aus Ölquellen geförderten mehrphasigen Mediums eingesetzt werden. Dieses Medium besteht im Wesentlichen aus den flüssigen Phasen Rohöl und Salzwasser und der gasförmigen Phase Erdgas, wobei alle Phasen die für kernmagnetische Resonanzen notwendigen Wasserstoffkerne enthalten und zu unterschiedlichen kernmagnetischen Resonanzen anregbar sind.

Bei der Messung des aus Ölquellen geförderten Mediums kann auch mit Testseparatoren gearbeitet werden. In Testseparatoren wird das geförderte Medium über einen Zeitraum eingeleitet, und die Testseparatoren trennen die einzelnen Phasen des Mediums voneinander und bestimmen die Anteile der einzelnen Phasen an dem Medium. Jedoch sind Testseparatoren, im Gegensatz zu kernmagnetischen Durchflussmessgeräten, nicht im Stande, Rohölanteile kleiner als 5 % zuverlässig zu separieren. Da der Rohölanteil aller Quellen stetig sinkt und der Rohölanteil einer Vielzahl von Quellen bereits geringer als 5 % ist, ist es derzeit nicht möglich, diese Quellen unter Verwendung von Testseparatoren wirtschaftlich auszubeuten. Um auch Quellen mit einem sehr geringen Rohölanteil weiterhin ausbeuten zu können, sind entsprechend genaue Durchflussmessgeräte für das aus mehreren Phasen bestehende Medium Rohöl erforderlich. Hierfür kommen insbesondere kernmagnetische Durchflussmessgeräte infrage.

Das kernmagnetische Durchflussmessgerät weist zusätzlich eine ein anderes Messprinzip umsetzende weitere Messeinrichtung auf. Unterschiedliche Messprinzipien zur Durchflussmessung haben unterschiedliche Vor- und Nachteile. Bei Kombination von zwei Messeinrichtungen, die unterschiedliche Messprinzipien umsetzen, können die Nachteile des einen Messprinzips durch die Vorteile des anderen Messprinzips zumindest teilweise kompensiert werden.

Es gibt nach verschiedenen Messprinzipien arbeitende Messeinrichtungen, mit denen das insgesamt durch ein Messrohr strömende Medium hinreichend genau gemessen werden kann. Das gilt, wenn auch teilweise mit Einschränkungen, für Differenzdruckdurchflussmesseinrichtungen, für Ultraschalldurchflussmesseinrichtungen, für Coriolisdurchflussmesseinrichtungen und - unter Umständen mit besonderen Einschränkungen - auch für magnetisch-induktive Durchflussmesseinrichtungen. Folglich kann bei dem kernmagnetischen Durchflussmessgerät die kernmagnetische Messeinrichtung insbesondere mit einer Differenzdruckdurchflussmesseinrichtung, einer Ultraschalldurchflussmesseinrichtung, einer Coriolisdurchflussmesseinrichtung und gegebenenfalls auch mit einer magnetisch-induktiven Durchflussmesseinrichtung kombiniert werden. Vorliegend ist die weitere Messeinrichtung eine Differenzdruckdurchflussmessvorrichtung, wobei diese zur Differenzdruckmessung des Mediums im Messrohr ausgebildet ist. Ein solches kernmagnetisches Durchflussmessgerät ist aus der WO 98/59220 bekannt.

Wie kann nun mit einem kernmagnetischen Durchflussmessgerät gegenüber einem kernmagnetischen Durchflussmessgerät, das nur eine kernmagnetische Messeinrichtung aufweist, die Messgenauigkeit der Durchflussmessung für die gasförmige Phase verbessert werden?

Aufgabe der vorliegenden Erfindung ist daher die Angabe eines kernmagnetischen Durchflussmessgeräts mit einer verbesserten Messgenauigkeit der Durchflussmessung für die gasförmige Phase und die Angabe von Verfahren zum Betreiben von kernmagnetischen Durchflussmessgeräten.

Das erfindungsgemäße kernmagnetische Durchflussmessgerät besteht aus einer kernmagnetischen Messeinrichtung und aus einer ein anderes Messprinzip als das kernmagnetische Messprinzip umsetzenden Differenzdruckdurchflussmessvorrichtung. Bei dieser Messeinrichtung handelt es sich um eine solche, mit der das insgesamt durch das Messrohr strömende mehrphasige Medium hinreichend genau gemessen werden kann. Erfindungsgemäß gewinnt man mit dem kernmagnetischen Durchflussmessgerät zunächst zwei hinreichend genaue Messwerte, nämlich mit der zusätzlich vorgesehenen Messeinrichtung einen hinreichend genauen Messwert für das insgesamt durch das Messrohr strömende mehrphasige Medium und mit der kernmagnetischen Messeinrichtung einen hinreichend genauen Messwert für die flüssige Phase oder die flüssigen Phasen des durch das Messrohr strömenden mehrphasigen Mediums. Subtrahiert man nun von dem mit der zusätzlichen Messeinrichtung gewonnenen Messwert für das insgesamt durch das Messrohr strömende Medium den mit der kernmagnetischen Messeinrichtung gewonnenen Messwert für die flüssige Phase beziehungsweise die flüssigen Phasen des durch das Messrohr strömenden Mediums, so erhält man, mit hinreichender Genauigkeit, einen Messwert für die gasförmige Phase des durch das Messrohr strömenden mehrphasigen Mediums.

Das, was zuvor dargestellt ist, ist eine Betrachtungsweise, die unberücksichtigt lässt, dass man zum Beispiel mit einer ein Venturirohr aufweisenden Differenzdruckdurchflussmesseinrichtung die gasförmige Phase eines durch ein Messrohr strömenden mehrphasigen Mediums bestimmen kann. Dabei müssen jedenfalls der Anteil der flüssigen Phase oder der flüssigen Phasen berücksichtigt werden, berücksichtigt werden muss auch die Dichte des insgesamt durch das Messrohr strömenden mehrphasigen Mediums. Hat man mit einer ein Venturirohr aufweisenden Differenzdruckdurchflussmesseinrichtung einen Messwert ermittelt, dann kann man also die gasförmige Phase mit einer gewissen Genauigkeit schätzen.

Bei dem, was weiter oben dargestellt ist, also Gewinnung eines hinreichend genauen ersten Messwerts für das insgesamt durch das Messrohr strömende mehrphasige Medium, Gewinnung eines hinreichend genauen zweiten Messwerts für die flüssige Phase oder die flüssigen Phasen des durch das Messrohr strömenden mehrphasigen Mediums und Subtraktion des zweiten Messwerts von dem ersten Messwert, müssen also unter Umständen verschiedene Parameter berücksichtigt werden, wie zum Beispiel die Dichte des mehrphasigen Mediums.

Vorzugsweise weist die Differenzdruckdurchflussmesseinrichtung, die zur Differenzdruckmessung des Mediums im Messrohr ausgebildet ist, an mindestens zwei in Längsrichtung des Messrohres verschiedenen Messstellen mindestens jeweils einen Druckmesser auf. Dabei sind die mindestens jeweils einen Druckmesser aufweisenden Messstellen an den Stellen des Messrohres vorgesehen, an denen sich der Druck des strömenden Mediums im Messrohr aufgrund des Querschnittsverlaufs voneinander unterscheidet.

Im Einzelnen gibt es für das zuvor beschriebene erfindungsgemäße kernmagnetische Durchflussmessgerät, bei dem also die weitere Messeinrichtung als Differenzdruckdurchflussmesseinrichtung ausgebildet ist, verschiedene Möglichkeiten der Ausgestaltung und Weiterbildung.

Eine erste bevorzugte Ausführungsform des erfindungsgemäßen kernmagnetischen Durchflussmessgeräts mit einer Differenzdruckdurchflussmesseinrichtung als weitere Messeinrichtung ist dadurch gekennzeichnet, dass das Messrohr aus einem ersten Teilmessrohr und einem zweiten Teilmessrohr besteht und dass die kernmagnetische Messeinrichtung um das erste Teilmessrohr angeordnet ist und die weitere Messeinrichtung in Verbindung mit dem zweiten Teilmessrohr verwirklicht ist.

Insbesondere bei der zuletzt beschriebenen Ausführungsform eines erfindungsgemäßen kernmagnetischen Durchflussmessgeräts, aber nicht nur bei dieser, kann das Messrohr in Längsrichtung des Messrohres wenigstens ein erstes Segment, ein auf das erste Segment folgendes zweites Segment und ein auf das zweite Segment folgendes drittes Segment aufweisen, wobei die Querschnittsfläche im ersten Segment und im dritten Segment konstant ist und die Querschnittsfläche im zweiten Segment einen von den Querschnittsflächen im ersten Segment und im dritten Segment abweichenden Verlauf haben kann.

Diese Ausführungsform eines kernmagnetischen Durchflussmessgeräts, bei der also das Messrohr in Längsrichtung des Messrohres wenigstens ein erstes Segment, ein auf das erste Segment folgendes zweites Segment und ein auf das zweite Segment folgendes drittes Segment aufweist, ist insbesondere dann sinnvoll, wenn das Messrohr aus einem ersten Teilmessrohr und einem zweiten Teilmessrohr besteht und die Segmente des Messrohres im zweiten Teilmessrohr vorgesehen sind. Vorzugsweise sind die Querschnittsflächen im zweiten Segment geringer als die Querschnittsflächen im ersten Segment und im dritten Segment.

Das, was zuvor in Bezug auf die Querschnittsflächen im zweiten Segment ausgeführt ist, kann in unterschiedlicher Weise realisiert werden. Insbesondere kann das Messrohr im zweiten Segment, wenn das Messrohr aus einem ersten Teilmessrohr und einem zweiten Teilmessrohr besteht, vorzugsweise also im zweiten Teilmessrohr, einen im zweiten Segment befestigbaren Einsatz aufweisen. Dieser Einsatz kann vorzugsweise in Längsrichtung des Messrohres einen konusförmigen Querschnittsverlauf aufweisen. Auch besteht ohne Weiteres die Möglichkeit, im Bereich des zweiten Segments eine Blende, eine Düse oder eine Venturidüse zu verwirklichen. Das erste Segment, das zweite Segment und das dritte Segment können zusammen ein Venturirohr bilden. Besteht das Messrohr aus einem ersten Teilmessrohr und einem zweiten Teilmessrohr und sind das erste Segment, das zweite Segment und das dritte Segment des Messrohres im zweiten Teilmessrohr vorgesehen, so ist also das zweite Teilmessrohr insgesamt als Venturirohr ausgebildet.

Denkbar ist auch eine ganz andere Ausführungsform eines erfindungsgemäßen kernmagnetischen Durchflussmessgeräts als die zuvor beschriebene, nämlich eine solche, bei der die Querschnittsfläche im zweiten Segment des Messrohres größer ist als die Querschnittsflächen im ersten Segment des Messrohres und im dritten Segment des Messrohres.

Weiter oben ist bereits erläutert, wie mit dem erfindungsgemäßen kernmagnetischen Durchflussmessgerät gegenüber einem kernmagnetischen Durchflussmessgerät, das nur eine kernmagnetische Messeinrichtung aufweist, die Messgenauigkeit der Durchflussmessung für die gasförmige Phase verbessert werden kann, nämlich durch die Gewinnung eines hinreichend genauen ersten Messwerts für das insgesamt durch das Messrohr strömende mehrphasige Medium, die Gewinnung eines hinreichend genauen zweiten Messwerts für die flüssige Phase oder die flüssigen Phasen des durch das Messrohr strömende mehrphasigen Mediums und die Subtraktion des zweiten Messwerts von dem ersten Messwert. Das ist eine "Schwarz-Weiß-Betrachtung", die unberücksichtigt lässt, dass die Gewinnung eines hinreichend genauen ersten Messwerts für das insgesamt durch das Messrohr strömende mehrphasige Medium von der Dichte des durch das Messrohr strömenden Mediums abhängig ist und dass die Dichte wiederum abhängig ist von der Zusammensetzung des durch das Messrohr strömenden mehrphasigen Mediums, nämlich von den Anteilen der flüssigen Phase beziehungsweise der flüssigen Phasen und der gasförmigen Phase. Wie diese Abhängigkeit der Dichte des durch das Messrohr strömenden mehrphasigen Mediums berücksichtigt werden kann, wird weiter unten noch erläutert.

Die weitere Messeinrichtung kann auch eine Ultraschalldurchflussmesseinrichtung sein. Ein solches kernmagnetisches Durchflussmessgerät ist dann besonders gut verwendbar, wenn das durch das Messrohr strömende mehrphasige Medium - und damit auch dessen gasförmige Phase - mit einer relativ hohen Geschwindigkeit durch das Messrohr strömt, insbesondere auch dann, wenn es sich bei dem mehrphasigen Medium, das durch das Messrohr strömt, um "feuchtes Gas" handelt, in dem die flüssige Phase sich gleichsam tropfenförmig in der gasförmigen Phase befindet, oder wenn die Innenseite des Messrohres durch die flüssige Phase beziehungsweise die flüssigen Phasen benetzt ist.

Im Einzelnen gibt es nun verschiedene Möglichkeiten, das erfindungsgemäße kernmagnetische Durchflussmessgerät und die erfindungsgemäßen Verfahren zum Betreiben von kernmagnetischen Durchflussmessgeräten auszugestalten und weiterzubilden. Dazu wird verwiesen auf die den Patentansprüchen 1, 14 und 16 nachgeordneten Patentansprüche und auf die Beschreibung bevorzugter Ausführungsbeispiele in Verbindung mit der Zeichnung. In der Zeichnung zeigen
- Fig. 1: schematisch, ein erstes Ausführungsbeispiel des erfindungsgemäßen kernmagnetischen Durchflussmessgeräts mit einem einteiligen Messrohr und
- Fig. 2: schematisch, ein zweites Ausführungsbeispiels des erfindungsgemäßen kernmagnetischen Durchflussmessgeräts mit einem aus einem ersten und einem zweiten Teilmessrohr bestehenden Messrohr.

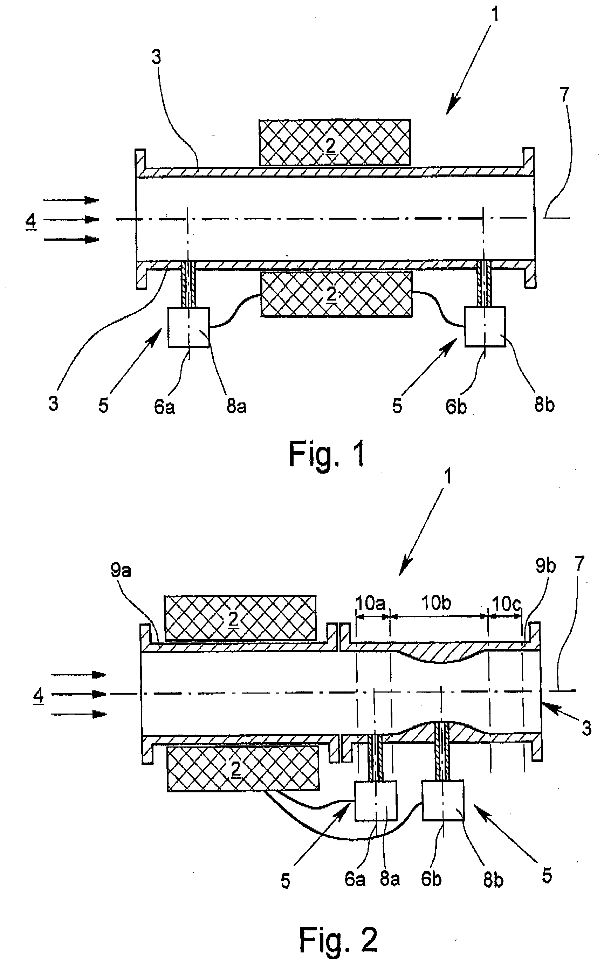

In der Fig. 1 ist ein erstes Ausführungsbeispiel und in der Fig. 2 ein zweites Ausführungsbeispiel des erfindungsgemäßen kernmagnetischen Durchflussmessgeräts 1 schematisch dargestellt. Jedes der kernmagnetischen Durchflussmessgeräte 1 umfasst eine kernmagnetische Messeinrichtung 2 zur Durchflussmessung eines durch ein Messrohr 3 strömenden mehrphasigen Mediums 4. Die kernmagnetische Messeinrichtung 2 ist um das Messrohr 3 angeordnet. Zusätzlich ist eine weitere Messeinrichtung vorgesehen, die nach einem anderen Messprinzip als dem kernmagnetischen Messprinzip arbeitet, und zwar ist die weitere Messeinrichtung eine Differenzdruckdurchflussmesseinrichtung 5. Dabei weist die Differenzdruckdurchflussmesseinrichtung 5 an zwei in Längsrichtung 7 des Messrohres 3 verschiedenen Messstellen 6a, 6b jeweils einen Druckmesser 8a, 8b auf.

Sowohl im ersten Ausführungsbeispiel als auch im zweiten Ausführungsbeispiel des erfindungsgemäßen kernmagnetischen Durchflussmessgeräts 1 erfolgt die Druckmessung des Mediums 4 im Messrohr 3 durch Öffnungen in der Wand des Messrohres 3. Dabei ist an zwei Messstellen 6a, 6b, die in Längsrichtung 7 des Messrohres 3 versetzt sind, jeweils ein Druckmesser 8a, 8b vorgesehen. Es können jedoch auch weitere Druckmesser vorgesehen sein. Die sich dadurch ergebende Redundanz erhöht die Genauigkeit der Druckmessungen. In den Druckmessern 8a, 8b sind als Drucksensoren handelsübliche Drucksensoren eingesetzt.

Im ersten Ausführungsbeispiel des erfindungsgemäßen kernmagnetischen Durchflussmessgeräts 1, siehe Fig. 1, weist das Messrohr 3 in Längsrichtung 7 des Messrohres 3 einen konstanten inneren Querschnittsflächenverlauf auf. Aufgrund der durch die Strömung des Mediums 4 im Messrohr 3 bedingten Reibung zwischen dem Medium 4 und dem Messrohr 3 fällt der Druck des Mediums 4 im Messrohr 3 in Strömungsrichtung des Mediums 4 in Längsrichtung 7 des Messrohres ab. Die Druckmesser 8a, 8b messen demnach unterschiedlich große Drücke; der Druck an der Messstelle 6a ist höher als der Druck an der Messstelle 6b.

Im zweiten Ausführungsbeispiel des erfindungsgemäßen kernmagnetischen Durchflussmessgeräts, siehe Fig. 2, besteht das Messrohr 3 aus einem ersten Teilmessrohr 9a und aus einem zweiten Teilmessrohr 9b. Die kernmagnetische Messeinrichtung 2 ist um das erste Teilmessrohr 9a angeordnet. Die weitere Messeinrichtung, also die Differenzdruckdurchflussmesseinrichtung 5, ist in Verbindung mit dem zweiten Teilmessrohr 9b verwirklicht. Das erste Teilmessrohr 9a ist also Teil der teilmagnetischen Messeinrichtung 2, während das zweite Teilmessrohr 9b Teil der Differenzdruckdurchflussmesseinrichtung 5 ist. Die kernmagnetische Messeinrichtung 2 mit dem ersten Teilmessrohr 9a und die Differenzdruckdurchflussmesseinrichtung 5 mit dem zweiten Teilmessrohr 9b bilden das gleichsam modular aufgebaute erfindungsgemäße kernmagnetische Durchflussmessgerät 1.

Wie die Fig. 2 zeigt, weist bei dem in dieser Figur gezeigten zweiten Ausführungsbeispiel das zweite Teilmessrohr 9b des Messrohres 3 ein erstes Segment 10a, ein auf das erste Segment 10a folgendes zweites Segment 10b und ein auf das zweite Segment 10b folgendes drittes Segment 10c auf. Dabei sind die Querschnittsflächen im ersten Segment 10a und im dritten Segment 10c konstant, während die Querschnittsfläche im zweiten Segment 10b einen von den Querschnittsflächen im ersten Segment 10a und im dritten Segment 10c abweichenden Verlauf hat. Konkret sind die Querschnittsflächen im zweiten Segment 10b geringer als die Querschnittsflächen im ersten Segment 10a und im dritten Segment 10c. Konkret bilden die Segmente 10a, 10b und 10c des zweiten Teilmessrohres 9b ein Venturirohr. Durch die Ausbildung des zweiten Teilmessrohres 9b als Venturirohr ist die Druckdifferenz zwischen den Druckmessern 8a und 8b größer als die Druckdifferenz zwischen den Druckmessern 8a und 8b im ersten Ausführungsbeispiel. Diese höhere Druckdifferenz kann zu einer besseren Messgenauigkeit führen.

In dem in Fig. 2 dargestellten Ausführungsbeispiel ist das erste Teilmessrohr 9a des Messrohres 3 in Längsrichtung 7 des Messrohres 3, also in Strömungsrichtung des Mediums 4, vor dem zweiten Teilmessrohr 9b angeordnet. Jedoch ist es auch möglich, das erste Teilmessrohr 9a hinter dem zweiten Teilmessrohr 9b vorzusehen. Je nach der Anordnung des ersten Teilmessrohres 9a in Bezug auf das zweite Teilmessrohr 9b kann das erste Teilmessrohr 9a entweder den Einlaufbereich des erfindungsgemäßen kernmagnetischen Durchflussmessgeräts 1 oder dessen Auslaufbereich darstellen.

Die kernmagnetische Messeinrichtung 2 und das erste Teilmessrohr 9a bilden zusammen das eingangs beschriebene kernmagnetische Durchflussmessgerät. Das zweite Teilmessrohr 9b und die Differenzdruckdurchflussmesseinrichtung 5 erweitern das kernmagnetische Durchflussmessgerät modular zu dem erfindungsgemäßen kernmagnetischen Durchflussmessgerät 1.

Der innere Querschnittsflächenverlauf des zweiten Teilmessrohres 9b des Messrohres 3 ist entlang der Längsachse 7 in drei Segmente unterteilt, nämlich in ein erstes Segment 10a, ein auf das erste Segment 10a in Strömungsrichtung des Mediums 4 folgendes zweites Segment 10b und ein weiteres, auf das zweite Segment 10b in Strömungsrichtung folgendes drittes Segment 10c. Die Querschnittsflächen entlang der Längsachse 7 sowohl im ersten Segment 10a als auch im dritten Segment 10c sind konstant, während der Querschnittsflächenverlauf entlang der Längsachse 7 im zweiten Segment 10b eine von den Querschnittsflächen im ersten Segment 10a und im zweiten Segment 10b abweichende Querschnittsfläche aufweist. Ganz konkret bildet der Querschnittsflächenverlauf der Segmente 10a, 10b und 10c zusammen ein Venturirohr. Die Längsstellen 6a, 6b, an denen die beiden Druckmesser 8a, 8b angeordnet sind, sind an Stellen auf der Längsachse 7 vorgesehen, an denen sich die Drücke des strömenden Mediums 4 im Teilmessrohr 9b aufgrund des Querschnittsverlaufs voneinander unterscheiden; der vom Druckmesser 8a gemessene Druck des Mediums 4 ist höher als der vom Druckmesser 8b gemessene Druck.

Durch die Ausbildung des zweiten Teilmessrohres 9b als Venturirohr ist die Druckdifferenz zwischen den Druckmessern 8a, 8b größer als die Druckdifferenz zwischen den Druckmessern 8a, 8b im ersten Ausführungsbeispiel. Mit der höheren Druckdifferenz geht auch ein höherer Strömungswiderstand des Mediums 4 im Messrohr 3 einher. Eine höhere Druckdifferenz hat eine bessere Messpräzision zur Folge.

In Strömungsrichtung des Mediums 4 gesehen ist das erste Teilmessrohr 9a vor dem zweiten Teilmessrohr 9b angeordnet. Jedoch ist es auch möglich, das erste Teilmessrohr 9a hinter dem zweiten Teilmessrohr 9b anzuordnen. Zur präzisen Druckmessung ist sowohl ein Einlaufbereich vor als auch ein Auslaufbereich nach dem zweiten Teilmessrohr 9b erforderlich. Je nach Anordnung des ersten Teilmessrohres 9a in Bezug auf das zweite Teilmessrohr 9b kann das erste Teilmessrohr 9a entweder den Einlaufbereich oder den Auslaufbereich darstellen.

Das erfindungsgemäße kernmagnetische Durchflussmessgerät 1 kann zur Durchflussmessung eines durch ein Messrohr 3 strömenden mehrphasigen Mediums 4 wie folgt betrieben werden:
a) Mit der bei dem erfindungsgemäßen kernmagnetischen Durchflussmessgerät 1 vorgesehenen weiteren Messeinrichtung, also der Differenzdruckdurchflussmesseinrichtung 5, wird ein Messwert für das insgesamt durch das Messrohr 3 strömende mehrphasige Medium 4 bestimmt.
b) Mit der kernmagnetischen Messeinrichtung 2 wird ein Messwert für die flüssige Phase oder die flüssigen Phasen des durch das Messrohr 3 strömenden mehrphasigen Mediums 4 bestimmt.
c) Zur Bestimmung des Messwerts für die gasförmige Phase des durch das Messrohr 3 strömenden mehrphasigen Mediums 4 wird von dem mit der zusätzlichen Messeinrichtung, im Ausführungsbeispiel also der Differenzdruckdurchflussmesseinrichtung 5, gewonnenen Messwert für das insgesamt durch das Messrohr 3 strömende mehrphasige Medium 4 der mit der kernmagnetischen Messeinrichtung 2 gewonnene Messwert für die flüssige Phase oder die flüssigen Phasen des durch das Messrohr 3 strömenden mehrphasigen Mediums 4 subtrahiert.

Vorzugsweise wird bei dem zuvor beschriebenen Verfahren die Bestimmung des Messwerts für das insgesamt durch das Messrohr 3 strömende mehrphasige Medium 4 wiederholt, vorzugsweise mehrfach wiederholt, und wird aus den dabei gewonnenen Messwerten ein Mittelwert gebildet und wird zur Bestimmung des Messwerts für die gasförmige Phase des durch das Messrohr 3 strömenden mehrphasigen Mediums 4 von dem gebildeten Messwert der Messwert für die flüssige Phase oder die flüssigen Phasen des durch das Messrohr 3 strömenden mehrphasigen Mediums subtrahiert.

Weiter oben ist bereits ausgeführt, dass das zuvor angesprochene Verfahren zum Betreiben eines kernmagnetischen Durchflussmessgeräts 1 auf einer "Schwarz-Weiß-Betrachtung" beruht, die unberücksichtigt lässt, dass die Gewinnung eines hinreichend genauen ersten Messwerts für das insgesamt durch das Messrohr 3 strömende mehrphasige Medium jedenfalls dann, wenn mit einer Differenzdruckdurchflussmesseinrichtung 5 als weitere Messeinrichtung gearbeitet wird, von der Dichte des durch das Messrohr 3 strömenden Mediums 4 abhängig ist und dass die Dichte des durch das Messrohr 3 strömenden Mediums 4 wiederum abhängig ist von der Zusammensetzung des durch das Messrohr 3 strömenden mehrphasigen Mediums 4, nämlich von den Anteilen der flüssigen Phase beziehungsweise der flüssigen Phasen und der gasförmigen Phase an dem insgesamt durch das Messrohr 3 strömenden mehrphasigen Medium 4. Dies berücksichtigend, empfiehlt sich ein Verfahren zum Betreiben eines erfindungsgemäßen kernmagnetischen Durchflussmessgeräts 1 zur Durchflussmessung eines durch ein Messrohr 3 strömenden mehrphasigen Mediums 4, wobei das kernmagnetische Durchflussmessgerät 1 eine kernmagnetische Messeinrichtung 2 und zusätzlich eine an anderes Messprinzip umsetzende weitere Messeinrichtung, nämlich eine Differenzdruckdurchflussmesseinrichtung 5, aufweist, das dadurch gekennzeichnet ist, dass mit der weiteren Messeinrichtung mehrfach, nämlich sukzessive ein Messwert für das insgesamt durch das Messrohr 3 strömende mehrphasige Medium 4 bestimmt wird und dass bei der (n + 1)-ten Bestimmung der bei der n-ten Bestimmung gewonnene Messwert berücksichtigt wird. Dabei wird also bei der (n + 1)-ten Bestimmung des Messwerts für das insgesamt durch das Messrohr 3 strömende mehrphasige Medium 4 der bei der n-ten Bestimmung gewonnene Messwert berücksichtigt, wird also die Abhängigkeit der Dichte des durch das Messrohr 3 strömenden Mediums 4 von der Zusammensetzung des durch das Messrohr 3 strömenden mehrphasigen Mediums 4 berücksichtigt.

Das, was zuvor erläutert worden ist, also die mehrfache Bestimmung des durch das Messrohr 3 insgesamt strömenden mehrphasige Mediums 3 mit Hilfe der weiteren Messeinrichtung wird vorzugsweise so lange durchgeführt, bis die Differenz zwischen dem bei der (n + 1)-ten Bestimmung gewonnenen Messwert und dem bei der n-ten Bestimmung gewonnenen Messwert kleiner als eine vorgegebene, als zulässig angesehene Abweichung ist, beispielsweise eine Abweichung von 3 % oder kleiner, unter Umständen auch von 1 %.

Bei der zuvor beschriebenen mehrfachen Bestimmung des durch das Messrohr 3 insgesamt strömenden mehrphasigen Mediums 4 mit Hilfe der weiteren Messeinrichtung wird bei der zweiten Bestimmung, bei der dritten Bestimmung, bis zur (n + 1)-ten Bestimmung mit einem Algorithmus oder mit Algorithmen gearbeitet, die die Dichte des durch das Messrohr 3 strömende mehrphasigen Mediums 4 auf der Grundlage der Zusammensetzung des durch das Messrohr 3 insgesamt strömende mehrphasige Mediums 4 bestimmen, also des Anteils der flüssigen Phase beziehungsweise der flüssigen Phasen einerseits und der gasförmigen Phase andererseits.

### Bezugszeichen:

- 1: Durchflussmessgerät
- 2: Messeinrichtung
- 3: Messrohr
- 4: Medium
- 5: Differenzdruckdurchflussmesseinrichtung
- 6a, 6b: Längsstellen
- 7: Längsachse
- 8a, 8b: Druckmesser
- 9a: erstes Teilmessrohr
- 9b: zweites Teilmessrohr
- 10a: erstes Segment
- 10b: zweites Segment
- 10c: drittes Segment

## Patentansprüche

1. Kernmagnetisches Durchflussmessgerät zur Durchflussmessung eines durch ein Messrohr (3) strömenden mehrphasigen Mediums (4) mit einer kernmagnetischen Messeinrichtung (2),
wobei die kernmagnetische Messeinrichtung (2) um das Messrohr (3) angeordnet ist,
wobei zusätzlich eine ein anderes Messprinzip umsetzende weitere Messeinrichtung zur Durchflussmessung des insgesamt durch das Messrohr strömenden mehrphasigen Mediums (4) vorgesehen ist,
wobei die weitere Messeinrichtung eine Differenzdruckdurchflussmesseinrichtung (5) ist, und
wobei die Differenzdruckdurchflussmesseinrichtung (5) zur Differenzdruckmessung des mehrphasigen Mediums (4) im Messrohr (3) ausgebildet ist,
**dadurch gekennzeichnet,**
**dass** die kernmagnetische Messeinrichtung zur Durchflussmessung der flüssigen Phase oder Phasen ausgebildet ist,
**dass** an mindestens zwei in Längsrichtung (7) des Messrohres (3) verschiedenen Messstellen (6a, 6b) mindestens jeweils ein Druckmesser (8a, 8b) vorgesehen ist, und
**dass** das kernmagnetische Durchflussmessgerät ausgebildet ist, zur Bestimmung eines Messwerts für die gasförmige Phase des durch das Messrohr strömenden mehrphasigen Mediums von dem mit der zusätzlichen Messeinrichtung gewonnenen Messwert für das insgesamt durch das Messrohr strömende mehrphasige Medium den mit der kernmagnetischen Messeinrichtung gewonnenen Messwert für die flüssige Phase oder die flüssigen Phasen des durch das Messrohr strömenden mehrphasigen Mediums zu subtrahieren.

2. Kernmagnetisches Durchflussmessgerät nach Anspruch 1, **dadurch gekennzeichnet, dass** die mindestens jeweils einen Druckmesser (8a, 8b) aufweisenden Messstellen (6a, 6b) an den Stellen des Messrohres (3) vorgesehen sind, an denen sich der Druck des strömenden Mediums (4) im Messrohr (3) aufgrund des Querschnittsverlaufs voneinander unterscheidet.

3. Kernmagnetisches Durchflussmessgerät nach Anspruch 1 oder 2, **dadurch gekennzeichnet, dass** das Messrohr (3) aus einem ersten Teilmessrohr (9a) und einem zweiten Teilmessrohr (9b) besteht und dass die kernmagnetische Messeinrichtung (2) um das erste Teilmessrohr (9a) angeordnet ist und die weitere Messeinrichtung in Verbindung mit dem zweiten Teilmessrohr (9b) verwirklicht ist.

4. Kernmagnetisches Durchflussmessgerät nach einem der Ansprüche 1 bis 3, **dadurch gekennzeichnet, dass** das Messrohr (3) in Längsrichtung (7) des Messrohres (3) wenigstens ein erstes Segment (10a), ein auf das erste Segment (10a) folgendes zweites Segment (10b) und ein auf das zweite Segment (10b) folgendes drittes Segment (10c) aufweist und dass die Querschnittsfläche im ersten Segment (10a) und im dritten Segment (10c) konstant ist und die Querschnittsfläche im zweiten Segment (10b) einen von den Querschnittsflächen im ersten Segment (10a) und im dritten Segment (10c) abweichenden Verlauf hat.

5. Kernmagnetisches Durchflussmessgerät nach Anspruch 3 und 4, **dadurch gekennzeichnet, dass** die Segmente (10a, 10b, 10c) des Messrohres (3) im zweiten Teilmessrohr (9b) vorgesehen sind.

6. Kernmagnetisches Durchflussmessgerät nach Anspruch 4 oder 5, **dadurch gekennzeichnet, dass** die Querschnittsflächen im zweiten Segment (10b) geringer sind als die Querschnittsflächen im ersten Segment (10a) und im dritten Segment (10c).

7. Kernmagnetisches Durchflussmessgerät nach Anspruch 6, **dadurch gekennzeichnet, dass** das Messrohr (3) im zweiten Segment (10b) einen im zweiten Segment (10b) befestigbaren Einsatz aufweist.

8. Kernmagnetisches Durchflussmessgerät nach Anspruch 7, **dadurch gekennzeichnet, dass** der Einsatz in Längsrichtung des Messrohres (3) einen konusförmigen Querschnittsverlauf aufweist.

9. Kernmagnetisches Durchflussmessgerät nach Anspruch 6 oder 7, **dadurch gekennzeichnet, dass** im Bereich des zweiten Segments (10b) eine Blende, eine Düse oder eine Venturidüse verwirklicht ist.

10. Kernmagnetisches Durchflussmessgerät nach Anspruch 6 oder 7, **dadurch gekennzeichnet, dass** die Segmente (10a, 10b und 10c) zusammen ein Venturirohr bilden.

11. Kernmagnetisches Durchflussmessgerät nach Anspruch 4 oder 5, **dadurch gekennzeichnet, dass** die Querschnittsfläche im zweiten Segment (10b) größer ist als die Querschnittsflächen im ersten Segment (10a) und im dritten Segment (10c).

12. Verfahren zum Betreiben eines kernmagnetischen Durchflussmessgeräts zur Durchflussmessung eines durch ein Messrohr (3) strömenden mehrphasigen Mediums (4),
wobei das kernmagnetische Durchflussmessgerät eine kernmagnetische Messeinrichtung (2) und zusätzlich eine ein anderes Messprinzip umsetzende weitere Messeinrichtung aufweist, und
wobei mit der weiteren Messeinrichtung ein Messwert für das insgesamt durch das Messrohr (3) strömende mehrphasige Medium (4) bestimmt wird,
**dadurch gekennzeichnet,**
**dass** mit der kernmagnetischen Messeinrichtung (2) ein Messwert für die flüssige Phase oder die flüssigen Phasen des durch das Messrohr (3) strömenden mehrphasigen Mediums (4) bestimmt wird, und
**dass** zur Bestimmung des Messwerts für die gasförmige Phase des durch das Messrohr (3) strömenden mehrphasigen Mediums (4) von dem mit der zusätzlichen Messeinrichtung gewonnenen Messwert für das insgesamt durch das Messrohr (3) strömende mehrphasige Medium (4) der mit der kernmagnetischen Messeinrichtung (2) gewonnene Messwert für die flüssige Phase oder die flüssigen Phasen des durch das Messrohr (3) strömenden mehrphasigen Mediums (4) subtrahiert wird.

13. Verfahren nach Anspruch 12, **dadurch gekennzeichnet, dass** die Bestimmung des Messwert für das insgesamt durch das Messrohr (3) strömende mehrphasige Medium (4) wiederholt wird, vorzugsweise mehrfach wiederholt wird, und aus den dabei gewonnenen Messwerten ein Mittelwert gebildet wird und dass zur Bestimmung des Messwerts für die gasförmige Phase des durch das Messrohr (3) strömenden mehrphasigen Mediums (4) von dem gebildeten Mittelwert der Messwerte für die flüssige Phase oder die flüssigen Phasen des durch das Messrohr (3) strömenden mehrphasigen Mediums (4) subtrahiert wird.

## Claims

1. Nuclear magnetic flowmeter for measuring the flow of a multi-phase medium (4) flowing through a measuring tube (3) having a nuclear magnetic measuring device (2),
wherein the nuclear magnetic measuring device (2) is arranged around the measuring tube (3),
wherein additionally a further measuring device implementing a different measuring principle is provided for flow measurement of the multi-phase medium (4) flowing overall through the measuring tube,
wherein the further measuring device is a differential pressure flow measuring device (5) and
wherein the differential pressure flow measuring device (5) is designed for measuring the differential pressure of the multi-phase medium (4) in the measuring tube (3),
**characterized in**
**that** the nuclear magnetic measuring device is designed for flow measurement of the liquid phase or phases,
**that** at least one pressure gauge (8a, 8b) is provided at each of at least two differing measuring points (6a, 6b) in the longitudinal direction (7) of the measuring tube (3), and
**that**, in order to determine a measurement value for the gaseous phase of the multi-phase medium flowing through the measuring tube, the nuclear magnetic flowmeter is designed to subtract the measurement value obtained with the nuclear magnetic measuring device for the liquid phase or the liquid phases of the multi-phase medium flowing through the measuring tube from the measurement value obtained with the additional measuring device for the multi-phase medium flowing overall through the measuring tube.

2. Nuclear magnetic flowmeter according to claim 1, **characterized in that** the measuring sites (6a, 6b), each having at least one pressure gauge (8a, 8b), are provided at the points on the measuring tube (3) at which the pressure of the flowing medium (4) in the measuring tube (3) differs from one another on account of the cross-sectional profile.

3. Nuclear magnetic flowmeter according to claim 1 or 2, **characterized in that** the measuring tube (3) consists of a first measuring tube component (9a) and a second measuring tube component (9b), and that the nuclear magnetic measuring device (2) is arranged around the first measuring tube component (9a) and the further measuring device is substantiated in connection with the second measuring tube component (9b).

4. Nuclear magnetic flowmeter according to any one of claims 1 to 3, **characterized in that** the measuring tube (3) has at least one first segment (10a) in the longitudinal direction (7) of the measuring tube (3), a second segment (10b) following the first segment (10a) and a third segment (10c) following the second segment (10b), and that the cross-sectional area in the first segment (10a) and in the third segment (10c) is constant and the cross-sectional area in the second segment (10b) has a different course from the cross-sectional areas in the first segment (10a) and in the third segment (10c).

5. Nuclear magnetic flowmeter according to claim 3 and 4, **characterized in that** the segments (10a, 10b, 10c) of the measuring tube (3) are provided in the second measuring tube component (9b).

6. Nuclear magnetic flowmeter according to claim 4 or 5, **characterized in that** the cross-sectional areas in the second segment (10b) are smaller than the cross-sectional areas in the first segment (10a) and in the third segment (10c).

7. Nuclear magnetic flowmeter according to claim 6, **characterized in that** the measuring tube (3) in the second segment (10b) has an insert which can be fastened in the second segment (10b).

8. Nuclear magnetic flowmeter according to claim 7, **characterized in that** the insert has a conical cross-sectional profile in the longitudinal direction of the measuring tube (3).

9. Nuclear magnetic flowmeter according to claim 6 or 7, **characterized in that** a diaphragm, a nozzle or a venturi nozzle is substantiated in the region of the second segment (10b).

10. Nuclear magnetic flowmeter according to claim 6 or 7, **characterized in that** the segments (10a, 10b and 10c) together form a venturi tube.

11. Nuclear magnetic flowmeter according to claim 4 or 5, **characterized in that** the cross-sectional area in the second segment (10b) is larger than the cross-sectional areas in the first segment (10a) and in the third segment (10c).

12. Method for operating a nuclear magnetic flowmeter for measuring the flow of a multi-phase medium (4) flowing through a measuring tube (3),
wherein the nuclear magnetic flowmeter has a nuclear magnetic measuring device (2) and, in addition, a further measuring device which implements a different measuring principle, and
wherein a measurement value for the multi-phase medium (4) flowing overall through the measuring tube (3) is determined with the further measuring device,
**characterized in**
**that** measurement value for the liquid phase or the liquid phases of the multi-phase medium (4) flowing through the measuring tube (3) is determined with the nuclear magnetic measuring device (2), and
**that**, in order to determine the measurement value for the gaseous phase of the multi-phase medium (4) flowing through the measuring tube (3), the measurement value obtained with the nuclear magnetic measuring device (2) for the liquid phase or the liquid phases of the multi-phase medium (4) flowing through the measuring tube (3) is subtracted from the measurement value obtained with the additional measuring device for the multi-phase medium (4) flowing overall through the measuring tube (3).

13. Method according to claim 12, **characterized in that** the determination of the measurement value for the multi-phase medium (4) flowing overall through the measuring tube (3) is repeated, preferably repeated several times, and a mean value is formed from the flow measurement values obtained thereby and that, in order to determine the measurement value for the gaseous phase of the multi-phase medium (4) flowing through the measuring tube (3), the measurement values for the liquid phase or the liquid phases of the multi-phase medium (4) flowing through the measuring tube (3) are subtracted from the formed mean value.

## Revendications

1. Débitmètre magnétique nucléaire pour la mesure du débit d'un fluide multiphasique (4) circulant dans un tube de mesure (3) et muni d'un dispositif de mesure magnétique nucléaire (2),
dans lequel le dispositif de mesure magnétique nucléaire (2) est disposé autour du tube de mesure (3),
dans lequel, un autre dispositif de mesure mettant en œuvre un principe de mesure différent est en outre prévu pour la mesure du débit de la totalité du fluide multiphasique (4) circulant dans le tube de mesure,
dans lequel l'autre dispositif de mesure est un dispositif de mesure de débit à pression différentielle (5), et
dans lequel le dispositif de mesure de débit à pression différentielle (5) est conçu pour mesurer la pression différentielle du fluide multiphasique (4) dans le tube de mesure (3),
**caractérisé en ce que** le dispositif de mesure magnétique nucléaire est conçu pour mesurer le débit de la phase ou des phases liquide(s),
**en ce qu'**il est prévu respectivement au moins un manomètre (8a, 8b) en au moins deux points de mesure (6a, 6b) différents dans la direction longitudinale (7) du tube de mesure (3), et
**en ce que** le débitmètre magnétique nucléaire est conçu, afin de déterminer une valeur de mesure pour la phase gazeuse du fluide multiphasique circulant dans le tube de mesure, pour soustraire à la valeur de mesure obtenue au moyen du dispositif de mesure supplémentaire pour la totalité du fluide multiphasique circulant dans le tube de mesure, la valeur de mesure obtenue au moyen du dispositif de mesure magnétique nucléaire pour la phase liquide ou les phases liquides du fluide multiphasique circulant dans le tube de mesure.

2. Débitmètre magnétique nucléaire selon la revendication 1, **caractérisé en ce que** les points de mesure (6a, 6b) présentant chacun au moins un manomètre (8a, 8b) sont prévus aux emplacements du tube de mesure (3) auxquels la pression du fluide en écoulement (4) dans le tube de mesure (3) varie en raison du profil de section transversale.

3. Débitmètre magnétique nucléaire selon la revendication 1 ou 2, **caractérisé en ce que** le tube de mesure (3) est constitué d'un premier tube de mesure partiel (9a) et d'un deuxième tube de mesure partiel (9b) et **en ce que** le dispositif de mesure magnétique nucléaire (2) est disposé autour du premier tube de mesure partiel (9a) et l'autre dispositif de mesure est mis en œuvre en liaison avec le deuxième tube de mesure partiel (9b).

4. Débitmètre magnétique nucléaire selon l'une des revendications 1 à 3, **caractérisé en ce que** le tube de mesure (3) présente, dans la direction longitudinale (7) du tube de mesure (3), au moins un premier segment (10a), un deuxième segment (10b) suivant le premier segment (10a) et un troisième segment (10c) suivant le deuxième segment (10b) et **en ce que** la surface de section transversale dans le premier segment (10a) et dans le troisième segment (10c) est constante et la surface de section transversale dans le deuxième segment (10b) présente un profil qui s'écarte des surfaces de section transversale dans le premier segment (10a) et dans le troisième segment (10c).

5. Débitmètre magnétique nucléaire selon les revendications 3 et 4, **caractérisé en ce que** les segments (10a, 10b, 10c) du tube de mesure (3) sont prévus dans le deuxième tube de mesure partiel (9b).

6. Débitmètre magnétique nucléaire selon la revendication 4 ou 5, **caractérisé en ce que** les surfaces de section transversale dans le deuxième segment (10b) sont inférieures aux surfaces de section transversale dans le premier segment (10a) et dans le troisième segment (10c).

7. Débitmètre magnétique nucléaire selon la revendication 6, **caractérisé en ce que**, dans le deuxième segment (10b), le tube de mesure (3) comporte un insert qui peut être fixé dans le deuxième segment (10b).

8. Débitmètre magnétique nucléaire selon la revendication 7, **caractérisé en ce que** l'insert présente un profil conique de section transversale dans la direction longitudinale du tube de mesure (3).

9. Débitmètre magnétique nucléaire selon la revendication 6 ou 7, **caractérisé en ce qu'**un diaphragme, une buse ou une buse venturi est réalisé dans la zone du deuxième segment (10b).

10. Débitmètre magnétique nucléaire selon la revendication 6 ou 7, **caractérisé en ce que** les segments (10a, 10b et 10c) forment ensemble un tube venturi.

11. Débitmètre magnétique nucléaire selon la revendication 4 ou 5, **caractérisé en ce que** la surface de section transversale dans le deuxième segment (10b) est supérieure aux surfaces de section transversale dans le premier segment (10a) et dans le troisième segment (10c).

12. Procédé pour le fonctionnement d'un débitmètre magnétique nucléaire pour la mesure du débit d'un fluide multiphasique (4) circulant dans un tube de mesure (3),
dans lequel le débitmètre magnétique nucléaire comporte un dispositif de mesure magnétique nucléaire (2) ainsi qu'en outre un autre dispositif de mesure mettant en œuvre un principe de mesure différent, et
dans lequel une valeur de mesure pour la totalité du fluide multiphasique (4) circulant dans le tube de mesure (3) est déterminée au moyen de l'autre dispositif de mesure,
**caractérisé en ce qu'**une valeur de mesure pour la phase liquide ou les phases liquides du fluide multiphasique (4) circulant dans le tube de mesure (3) est déterminée au moyen du dispositif de mesure magnétique nucléaire (2), et
**en ce que**, pour la détermination de la valeur de mesure de la phase gazeuse du fluide multiphasique (4) circulant dans le tube de mesure (3), la valeur de mesure obtenue au moyen du dispositif de mesure magnétique nucléaire (2) pour la phase liquide ou les phases liquides du fluide multiphasique (4) circulant dans le tube de mesure (3) est soustraite à la valeur de mesure obtenue au moyen du dispositif de mesure supplémentaire pour la totalité du fluide multiphasique (4) circulant dans le tube de mesure (3).

13. Procédé selon la revendication 12, **caractérisé en ce que** la détermination de la valeur de mesure pour la totalité du fluide multiphasique (4) circulant dans le tube de mesure (3) est répétée, de préférence plusieurs fois, et une valeur moyenne est calculée à partir des valeurs de mesure ainsi obtenues et **en ce que**, pour la détermination de la valeur de mesure pour la phase gazeuse du fluide multiphasique (4) circulant dans le tube de mesure (3), à la valeur moyenne est soustraite la valeur de mesure pour la phase liquide ou les phases liquides du fluide multiphasique (4) circulant dans le tube de mesure (3).
